# EUROPÄISCHE PATENTSCHRIFT

(11) **EP 2 324 706 B1**
(45) Veröffentlichungstag und Bekanntmachung des Hinweises auf die Patenterteilung: **29.08.2012**
(21) Anmeldenummer: 10014309.8
(22) Anmeldetag: 05.11.2010
(51) Int. Cl.: A01K 13/00

(54) **Pferdedecke**
Horse blanket
Couverture de cheval

(30) Priorität: 19.11.2009 DE 202009015782 U
(43) Veröffentlichungstag der Anmeldung: 25.05.2011
(73) Patentinhaber: Teun van Riel Horse Supplements, 5061 KD Oisterwijk (NL)
(72) Erfinder: van Riel, Antonius, 5062 CN Oisterwijk (NL)
(74) Vertreter: Müller, Karl-Ernst

(56) Entgegenhaltungen:
- WO-A1-2008/006148
- WO-A2-2006/036884
- CA-A1- 2 484 576
- NL-C- 73 010
- US-B1- 6 408 604

## Beschreibung

Die Erfindung betrifft eine Pferdedecke mit einem im Brustbereich des Pferdes verschließbaren oder geschlossenen Halsausschnitt sowie mit einer unter dem Bauch des Pferdes verlaufenden Begurtung, wobei im Widerristbereich des Zuschnitts der Pferdedecke ein den Widerrist des Pferdes überspannender und diesen kammernder Einsatz angeordnet ist, dessen Material dadurch nicht auf dem Haarkleid des Pferdes aufliegt.

Eine Pferdedecke mit den vorgenannten Merkmalen ist in der WO 2006/036884 A2 beschrieben. Die bekannte Pferdedecke weist im Brustbereich einen geteilten Zuschnitt mit zwei Brustklappen auf, die bei auf dem Pferd aufliegender Pferdedecke durch einen Verschluss miteinander verbindbar sind. Die bekannte Pferdedecke ist in ihrem Widerristbereich bereits mit einem Einsatz versehen, der den Widerrist des Pferdes derart kammert, dass das Material des Einsatzes dadurch nicht auf dem Haarkleid des Pferdes aufliegt. Hierdurch soll der Tragekomfort der Decke verbessert werden, und es sollen Scheuerstellen der aufliegenden Decke im Widerristbereich und am Mähnenansatz vermieden sein. Zur Vergrößerung der Bewegungsfreiheit des Pferdes bei aufliegender Pferdedecke sind durch entsprechende Abnäher gebildete und an den Halsansatz anschließende Aufsprungfalten ausgebildet. In ihrem hinteren Bereich ist die Linienführung der Endkanten der über der Kruppe liegenden und seitlich an der Hinterhand herabfallenden Seitenlatze so ausgestaltet, dass die Hinterbacken des Pferdes ausgespart sind und frei liegen.

Mit der bekannten Pferdedecke ist noch der Nachteil verbunden, dass die Pferdedecke bei insbesondere durch das Hinlegen und Aufstehen des Pferdes verursachten Bewegungen seitlich verrutschen kann. Da insbesondere Winterdecken aufgrund eines entsprechend schweren Materials auch ein erhebliches Gewicht aufweisen können, führt die durch den Einsatz bewirkte Kammerung am Widerrist dazu, dass das Gewicht in den auf dem Haarkleid des Pferdes im Schulterbereich aufliegenden Bereichen der Pferdedecke wirksam wird und hier zu entsprechenden Beanspruchungen führen kann. Schließlich kommt hinzu, dass die eingearbeiteten Aufsprungfalten zwar die Bewegungsfreiheit im Schulterbereich generell erhöhen, dass die Pferdedecke jedoch bei nur geringfügigen Bewegungen des Pferdes durch das Aufspringen der Aufsprungfalten sofort dem vollständigen Bewegungsbereich zur Verfügung stellt.

Der Erfindung liegt daher die Aufgabe zugrunde, eine Pferdedecke mit den eingangs genannten Merkmalen derart auszugestalten, dass der Tragekomfort für das Pferd verbessert ist.

Die Lösung dieser Aufgabe ergibt sich einschließlich vorteilhafter Ausgestaltungen und Weiterbildungen der Erfindung aus dem Inhalt der Schutzansprüche, welche dieser Beschreibung nachgestellt sind.

Die Erfindung sieht in ihrem Grundgedanken vor, dass der Einsatz aus einem elastischen Material besteht und auf der Innenseite des Einsatzes beidseitig des Widerristes in Richtung der Rückenlinie des Pferdes verlaufende Polsterrippen angeordnet sind, die ein seitliches Verrutschen der Pferdedecke über dem Widerrist erschweren und die Kammerung der Pferdedecke am Widerrist verstärken.

Mit der Erfindung ist der Vorteil verbunden, dass aufgrund der elastischen Ausbildung des Einsatzes eine ausreichende Bewegungsfreiheit des Pferdes bei aufliegender Pferdedecke auch bei einem Verzicht auf die Anordnung zusätzlicher Aufsprungfalten gewährleistet ist, wobei aufgrund der Elastizität des Einsatzes die Pferdedecke auch geringfügigen Bewegungen des Pferdes nachgibt, ohne gleich einen zu großen Spielraum freizugeben, wie dies bei der Anordnung von Aufsprungfalten gegeben ist. Ebenfalls führt die Verwendung eines elastischen Materials für den Einsatz zu einer guten Verteilung der von der aufliegenden Pferdedecke ausgeübten Gewichtskraft und des daraus resultierenden Druckes. Darüber hinaus ist in vorteilhafter Weise ein seitliches Verrutschen der Pferdedecke durch die an der Innenseite des Einsatzes angeordneten Polsterrippen verhindert, wobei die Polsterrippen gleichzeitig auch das Gewicht der aufliegenden Pferdedecke aufnehmen, sodass auf den Widerrist des Pferdes von der aufliegenden Pferdedecke kaum ein Druck ausgeübt wird. Durch die Anordnung der Polsterrippen ist gleichzeitig auch die den Mähnenkamm schützende Kammerung der Pferdedecke am Widerrist noch verbessert.

Hierzu ist nach einem Ausführungsbeispiel der Erfindung vorgesehen, dass die Polsterrippen beiderseits einer über den Einsatz verlaufenden, sich in Richtung der Rückenlinie des Pferdes erstreckenden Kammernaht und jeweils mit Abstand dazu angeordnet sind, so dass das Material des Einsatzes in dem zwischen den Polsterrippen befindlichen Bereich von dem Haarkleid des Pferdes abgehoben ist.

Vorteilhafterweise weisen die Polsterrippen nach einem Ausführungsbeispiel der Erfindung eine Tropfenform auf, deren größter Querschnitt der Kammernaht des Einsatzes zugewandt ist.

Die Anordnung des erfindungsgemäßen Einsatzes ist bei Pferdedecken möglich, die im Brustbereich des Pferdes einen einteiligen Zuschnitt aufweisen, so dass die Decke beim Auflegen auf das Pferd über den Kopf und den Hals des Pferdes gezogen werden muss.

Alternativ kann vorgesehen sein, dass die Pferdedecke im Brustbereich des Pferdes einen geteilten Zuschnitt aufweist und die beiden Brustlappen der Pferdedecke mit einer bei auf dem Pferd aufliegender Pferdedecke wirksam werdenden gegenseitigen Überlappung ausgestaltet und mittels einer vorderen Begurtung verschließbar sind. Insbesondere ist dabei vorgesehen, dass eine entsprechend großzügige Überlappung der Brustlappen der Pferdedecke verwirklicht ist, um auch einen ausreichenden Spielraum für eine Anpassung der Pferdedecke an die Anatomie des Pferdes zur Verfügung zu stellen.

Es ist weiterhin vorgesehen, dass der Deckenzuschnitt im Bereich der Hinterhand des Pferdes tief über dessen Hinterbacken heruntergezogene Seitenlatze aufweist, deren hintere Endkanten jeweils bis an das Ende der Rückennaht verlaufen; hierdurch ist sichergestellt, dass auch die Hinterbacken des Pferdes vor Wind und Kälte geschützt sind und nicht wie bei der gattungsgemäßen Decke freiliegen. In Ergänzung dazu kann vorgesehen sein, dass die Seitenlatze sich im Bereich des Schweifansatzes überlappen und dadurch den oberen Schweifbereich abdecken. Soweit sich beim Koten (Äpfeln) des Pferdes der Schweif des Pferdes hebt, ist zur Verbesserung des Tragekomforts nach einem Ausführungsbeispiel der Erfindung vorgesehen, dass die hinteren Endkanten der Seitenlatze im oberen Schweifbereich des Pferdes einen derartigen Verlauf aufweisen, dass eine Teilung der sich überlappenden Seitenlatze beim Heben des Schweifes gegeben ist.

Soweit üblicherweise, wie auch in der gattungsbildenden WO 2006/036884 A2 dargestellt, die Fixierung der Pferdedecke am Pferd durch kreuzweise unter dem Bauch verlaufende Kreuzgurte erfolgt, ist nach einem Ausführungsbeispiel der Erfindung eine innenliegende Anordnung der Kreuzgurte vorgesehen, indem das eine Ende der Kreuzgurte auf der einen Seite der Pferdedecke an deren Innenseite fest mit dem Deckenmaterial verbunden ist und an deren anderem Ende ein Gurtverschlussstück angebracht ist, welches mit einem auf der anderen Seite der Pferdedecke auf deren Außenseite angebrachten Gegenstück kuppelbar ist, wobei das Gurtverschlussstück durch einen in dem Deckenmaterial ausgebildeten Schlitz von der Innenseite der Pferdedecke auf deren Außenseite hindurchführbar ist.

In der Zeichnung ist ein Ausführungsbeispiel der Erfindung wiedergegeben, welches nachstehend beschrieben ist. Es zeigen:
- Fig. 1: Eine auf einem Pferd aufliegende Pferdedecke in einer Gesamtansicht,
- Fig. 2: den im Widerristbereich angeordneten elastischen Einsatz mit Polsterrippen in einer vergrößerten ausschnittsweisen Darstellung,

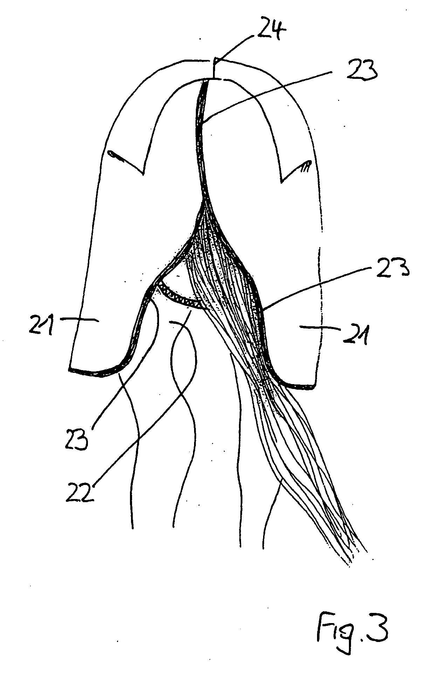

- Fig. 3: die auf dem Pferd aufliegende Pferdedecke in einer Ansicht von hinten auf den Schweifbereich des Pferdes.

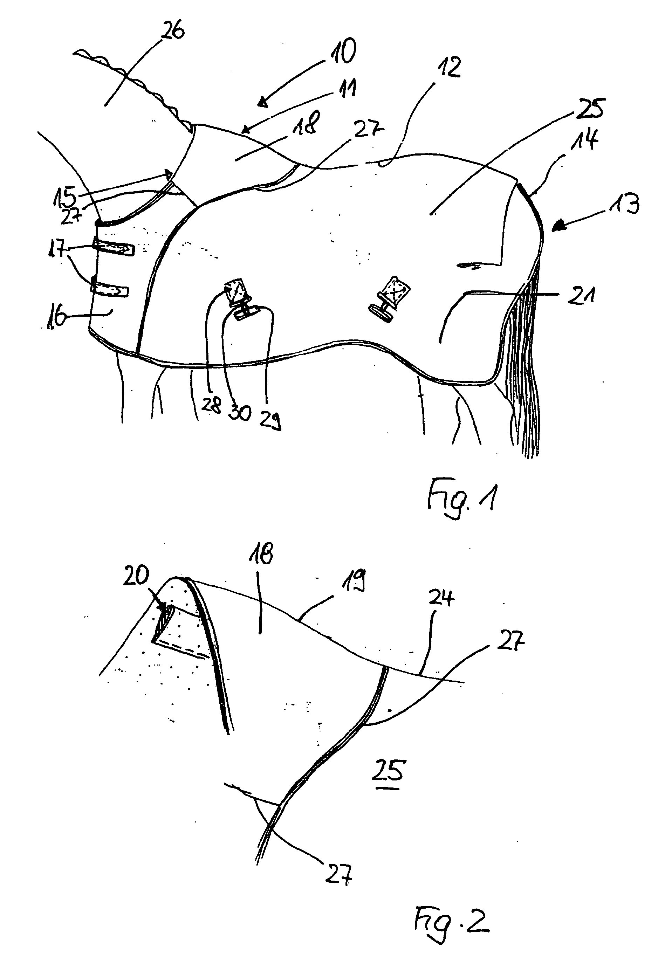

Das sich aus Fig. 1 ergebende Pferd 10 als Träger der dafür vorgesehenen Pferdedecke 25 weist einen Hals 26 auf, an den sich der Widerrist 11 und eine Rückenlinie 12 anschließen. Die Rückenlinie 12 geht in die Hinterhand 13 mit einem Schweifbereich 14 über.

Die auf dem Pferd 10 aufliegende Pferdedecke 25 weist in ihrem vorderen Bereich einen Halsausschnitt 15 auf, der in vordere Brustlappen 16 übergeht, die bei auf dem Pferd aufliegender Decke mit einer gegenseitigen Überlappung ausgeführt sind und mittels einer vorderen Begurtung 17 geschlossen werden können, sodass die Decke im Bereich der Vorhand des Pferdes geschlossen ist. Im Bereich des Widerristes 11 ist ein aus einem elastischen Material bestehender Einsatz 18 angeordnet, der den Widerrist 11 des Pferdes 10 überspannt und durch Nähte 27 von dem Deckenmaterial abgesetzt bzw. über die Nähte 27 damit verbunden ist. Soweit die Pferdedecke 25 symmetrisch ausgebildet ist, verläuft in Richtung der Rückenlinie 12 des Pferdes über den Einsatz 18 eine Kammernaht 19, die außerhalb des Einsatzes in eine Rückennaht 24 der Pferdedecke 25 übergeht.

Wie sich dazu aus Fig. 2 ergibt, sind an der Innenseite des Einsatzes 18 beiderseits des Widerristes 11 zwei Polsterrippen 20 angeordnet, die vorzugsweise ebenfalls aus einem elastischen Material bestehen. Die beiden Polsterrippen sind mit Abstand zu der mittigen Kammernaht 19 des Einsatzes 18 angeordnet, und zwar in einem solchen Abstand, dass das Material des Einsatzes 18 in dem zwischen den Polsterrippen 20 befindlichen Bereich leicht von dem Haarkleid des Pferdes abgehoben ist, wodurch die gewünschte Kammerung des Widerristes 11 ausgebildet ist. Entsprechend der Anatomie eines Pferdes im Widerristbereich weisen die Polsterrippen 20 eine Tropfenform auf, deren größter Querschnitt der Kammernaht 19 des Einsatzes 18 zugewandt ist, sodass in diesem Bereich auch die größte Abstützwirkung der Polsterrippen 20 gegeben ist. Aufgrund der Anordnung beiderseits des Widerristes verhindern die Polsterrippen 20 auch ein seitliches Verrutschen der Pferdedecke 25 über den Widerrist 11 des Pferdes 10 hinweg.

Im Bereich der Hinterhand weist die Pferdedecke 25 tief über die Hinterbacken 22 heruntergezogene Seitenlatze 21 auf, sodass auch die Hinterbacken 22 des Pferdes bei aufliegender Decke vor Wind und Kälte geschützt sind. Dabei sind die hinteren Seitenlatze 21 der Pferdedecke 25 so um die Hinterhand 13 herumgezogen, dass sich die Seitenlatze 21 im Bereich des Schweifansatzes überlappen und dadurch den oberen Schweifbereich 14 abdecken. Die hinteren Endkanten 23 der Seitenlatze 21 weisen dabei in dem oberen Schweifbereich 14 einen solchen Verlauf auf, dass beim Heben des Schweifes die sich überlappenden Seitenlatze 21 aufspringen bzw. teilen, sodass keine Beeinträchtigung des Pferdes 10 beim Äpfeln gegeben ist.

Soweit die Pferdedecke 25 in an sich bekannter Weise durch unter dem Bauch des Pferdes kreuzweise angeordnete Kreuzgurte fixiert wird, ist bei dem dargestellten Ausführungsbeispiel eine innenliegende Anordnung der Kreuzgurte vorgesehen. Hierzu sind die Kreuzgurte, wie nicht weiter dargestellt, mit ihrem einen Ende auf der einen Seite der Pferdedecke an deren Innenseite befestigt und weisen an ihrem anderen Ende ein Gurtverschlussstück 30 auf, welches durch einen entsprechend in dem Gurtmaterial ausgebildeten Schlitz 29 von der Innenseite der Pferdedecke 25 auf deren Außenseite hindurchführbar ist, wobei das Gurtverschlussstück 30 mit einem durch Vernähung 28 auf der Außenseite der Pferdedecke 25 befestigten Gegenstück kuppelbar ist.

## Patentansprüche

1. Pferdedecke (25) mit einem im Brustbereich des Pferdes verschließbaren oder geschlossenen Halsausschnitt (15) sowie mit einer unter dem Bauch des Pferdes verlaufenden Begurtung, wobei im Widerristbereich des Zuschnitts der Pferdedecke ein den Widerrist (11) des Pferdes (10) überspannender und diesen kammernder Einsatz (18) angeordnet ist, dessen Material dadurch nicht auf dem Haarkleid des Pferdes aufliegt, **dadurch gekennzeichnet, dass** der Einsatz (18) aus einem elastischen Material besteht und auf der Innenseite des Einsatzes (18) beidseitig des Widerristes (11) in Richtung der Rückenlinie (12) des Pferdes (10) verlaufende Polsterrippen (20) angeordnet sind, die ein seitliches Verrutschen der Pferdedecke (25) über dem Widerrist (11) erschweren und die Kammerung der Pferdedecke (25) am Widerrist (11) verstärken.

2. Pferdedecke nach Anspruch 1, **dadurch gekennzeichnet, dass** die Polsterrippen (20) beiderseits einer über den Einsatz (18) verlaufenden, sich in Richtung der Rückenlinie (12) des Pferdes (10) erstreckenden Kammernaht (19) und jeweils mit Abstand dazu angeordnet sind, so dass das Material des Einsatzes (18) in dem zwischen den Polsterrippen (20) befindlichen Bereich von dem Haarkleid des Pferdes (10) abgehoben ist.

3. Pferdedecke nach Anspruch 2, **dadurch gekennzeichnet, dass** die Polsterrippen (20) eine Tropfenform aufweisen, deren größter Querschnitt der Kammernaht (19) des Einsatzes (18) zugewandt ist.

4. Pferdedecke nach einem der Ansprüche 1 bis 3, **dadurch gekennzeichnet, dass** die Pferdedecke (25) im Brustbereich des Pferdes (10) einen einteiligen Zuschnitt aufweist.

5. Pferdedecke, nach einem der Ansprüche 1 bis 3, **dadurch gekennzeichnet, dass** die Pferdedecke (25) im Brustbereich des Pferdes (10) einen geteilten Zuschnitt aufweist und die beiden Brustlappen (16) der Pferdedecke (25) mit einer bei auf dem Pferd (10) aufliegender Pferdedecke wirksam werdenden gegenseitigen Überlappung ausgestaltet und mittels einer vorderen Begurtung (17) verschließbar sind.

6. Pferdedecke nach einem der Ansprüche 1 bis 5, **dadurch gekennzeichnet, dass** der Deckenzuschnitt im Bereich der Hinterhand (13) des Pferdes (10) tief über dessen Hinterbacken (22) heruntergezogene Seitenlatze (21) aufweist, deren hintere Endkanten (23) jeweils bis an das Ende der Rückennaht (24) verlaufen.

7. Pferdedecke nach Anspruch 6, **dadurch gekennzeichnet, dass** die Seitenlatze (21) sich im Bereich des Schweifansatzes überlappen und dadurch den oberen Schweifbereich (14) abdecken.

8. Pferdedecke nach Anspruch 6 oder 7, **dadurch gekennzeichnet, dass** die hinteren Endkanten (23) der Seitenlatze (21) im oberen Schweifbereich (14) des Pferdes (10) einen derartigen Verlauf aufweisen, dass eine Teilung der sich überlappenden Seitenlatze (21) beim Heben des Schweifes gegeben ist.

9. Pferdedecke nach einem der Ansprüche 1 bis 8, **dadurch gekennzeichnet, dass** an der Pferdedecke (25) kreuzweise unter dem Bauch des Pferdes (10) verlaufende Kreuzgurte angebracht sind, deren eines Ende auf der einen Seite der Pferdedecke (25) an deren Innenseite fest mit dem Deckenmaterial verbunden ist und an deren anderem Ende ein Gurtverschlussstück (30) angebracht ist, welches mit einem auf der anderen Seite der Pferdedecke (25) auf deren Außenseite angebrachten Gegenstück kuppelbar ist, wobei das Gurtverschlussstück durch einen in dem Deckenmaterial ausgebildeten Schlitz (29) von der Innenseite der Pferdedecke auf deren Außenseite hindurchführbar ist.

## Claims

1. A horse blanket (25), comprising a neck opening (15), which can be closed or which is closed in the chest area of the horse, as well as a girth arrangement, which runs underneath the belly (15) of the horse, wherein an insert (18), which stretches across the withers (11) of the horse (10) and which chambers it and the material of which thus does not bear on the coat of the horse, is arranged in the withers area of the cut of the horse blanket, **characterized in that** the insert (18) consists of an elastic material and **in that** padded ribs (20), which run on both sides of the withers (11) in the direction of the dorsal line (12) of the horse (10) and which hinder a lateral slipping of the horse blanket (25) across the withers (11) and which reinforce the chambering of the horse blanket (25) at the withers (11), are arranged on the inner side of the insert (18).

2. The horse blanket according to claim 1, **characterized in that** the padded ribs (20) are arranged on both sides of a chamber seam (19), which runs across the insert (18) and which extends in the direction of the dorsal line (12) of the horse (10) and in each case at a distance thereto, so that the material of the insert (18) is lifted from the coat of the horse (10) in the area located between the padded ribs (20).

3. The horse blanket according to claim 2, **characterized in that** the padded ribs (20) encompass a drop shape, the largest cross section of which faces the chamber seam (19) of the insert (18).

4. The horse blanket according to one of claims 1 to 3, **characterized in that** the horse blanket (25) encompasses a one-piece cut in the chest area of the horse (10).

5. The horse blanket according to one of claims 1 to 3, **characterized in that** the horse blanket (25) encompasses a separated cut in the chest area of the horse (10) and that the two chest cloths (16) of the horse blanket (25) are embodied with a mutual overlapping, which comes into effect when the horse blanket bears on the horse (10), and which can be closed by means of a front girth arrangement (17).

6. The horse blanket according to one of claims 1 to 5, **characterized in that**, in the area of the hind quarters (13) of the horse (10), the blanket cut encompasses side bibs (21), which are pulled down deep across its buttocks (22) of the horse and the rear trailing edges (23) of which in each case run to the end of the back seam (24).

7. The horse blanket according to claim 6, **characterized in that** the side bibs (21) overlap in the area of the tail-base and thus cover the upper tail area (14).

8. The horse blanket according to claim 6 or 7, **characterized in that** the rear trailing edges (23) of the side bibs (21), in the upper tail-base (14) of the horse (10), encompass a course, which is such that a separation of the overlapping side bibs (21) is provided in response to the lifting of the tail.

9. The horse blanket according to one of claims 1 to 8, **characterized in that** cross straps, which run crosswise underneath the belly of the horse (10) and the one end of which is fixedly connected to the blanket material on the one side of the horse blanket (25) on the inner side thereof and that a strap closing piece (30), which can be coupled to a counter piece attached to the other side of the horse blanket (25) on the outer side thereof, is attached to the other end thereof, wherein the strap closing piece can be guided from the inner side of the horse blanket to the outer side thereof through a slit (29), which is embodied in the blanket material.

## Revendications

1. Couverture de cheval (25) présentant une découpe pour le cou (15) fermée ou pouvant être fermée dans la zone du poitrail du cheval, ainsi qu'un harnais s'étendant sous le ventre du cheval, sachant qu'un insert (18) recouvrant le garrot (11) du cheval (10) et le compartimentant est disposé dans la zone du garrot de la pièce découpée de la couverture de cheval, dont le matériau ne repose pas par là-même sur la robe du cheval, **caractérisée en ce que** l'insert (18) se compose d'un matériau élastique et des nervures de rembourrage (20) s'étendant en direction de la ligne de dos (12) du cheval (10) sont disposées sur le côté intérieur de l'insert (18) de part et d'autre du garrot (11), lesquelles compliquent un glissement latéral de la couverture de cheval (25) sur le garrot (11) et renforcent la compartimentation de la couverture de cheval (25) sur le garrot (11).

2. Couverture de cheval selon la revendication 1, **caractérisée en ce que** les nervures de rembourrage (20) sont disposées de part et d'autre d'une couture de compartiment (19) s'étendant sur l'insert (18), s'avançant en direction de la ligne de dos (12) du cheval (10) et respectivement à distance de celle-ci de sorte que le matériau de l'insert (18) soit relevé de la robe du cheval, (10) dans la zone se trouvant entre les nervures de rembourrage (20).

3. Couverture de cheval selon la revendication 2, **caractérisée en ce que** les nervures de rembourrage (20) présentent une forme de goutte, dont la plus grande section transversale est tournée vers la couture de compartiment (19) de l'insert (18).

4. Couverture de cheval selon l'une quelconque des revendications 1 à 3, **caractérisée en ce que** la couverture de cheval (25) présente une pièce découpée en un morceau dans la zone du poitrail du cheval (10).

5. Couverture de cheval selon l'une quelconque des revendications 1 à 3, **caractérisée en ce que** la couverture de cheval (25) présente une pièce découpée divisée dans la zone du poitrail du cheval (10) et les deux éléments de poitrail (16) de la couverture de cheval (25) sont configurés avec un chevauchement réciproque devenant effectif lorsque la couverture de cheval repose sur le cheval (10) et peuvent être refermés à l'aide d'un harnais avant (17).

6. Couverture de cheval selon l'une quelconque des revendications 1 à 5, **caractérisée en ce que** la pièce découpée de couverture présente, dans la zone de l'arrière-main (13) du cheval (10), des bavettes latérales (21) descendues bas sur ses fesses (22), dont les arêtes d'extrémité arrière (23) s'étendent respectivement jusqu'à l'extrémité de la couture du dos (24).

7. Couverture de cheval selon la revendication 6, **caractérisée en ce que** les bavettes latérales (21) se chevauchent dans la zone de la naissance de la queue et recouvrent par là-même la zone de queue (14) supérieure.

8. Couverture de cheval selon la revendication 6 ou 7, **caractérisée en ce que** les arêtes d'extrémité arrière (23) des bavettes latérales (21) présentent, dans la zone de queue (14) supérieure du cheval (10), une étendue telle que les bavettes latérales (21) se chevauchant sont séparées lors du levage de la queue.

9. Couverture de cheval selon l'une quelconque des revendications 1 à 8, **caractérisée en ce que** des sangles croisées s'étendant en croix sous le ventre du cheval (10) sont montées sur la couverture du cheval (25), dont une extrémité est fixement reliée d'un côté de la couverture de cheval (25) sur son côté intérieur au matériau de la couverture et une pièce de fermeture de sangle (30) est montée sur son autre extrémité, laquelle peut être couplée à une pièce antagoniste montée de l'autre côté de la couverture de cheval (25) sur son côté extérieur, sachant que la pièce de fermeture de sangle peut passer par une fente (29) réalisée dans le matériau de couverture du côté intérieur de la couverture du cheval à son côté extérieur.
